(19) Europäisches Patentamt
European Patent Office
Office européen des brevets

(11) Numéro de publication : **0 347 329 B1**

(12) **FASCICULE DE BREVET EUROPEEN**

(45) Date de publication du fascicule du brevet :
**16.10.91 Bulletin 91/42**

(51) Int. Cl.⁵ : **B01J 2/30, C02F 11/00**

(21) Numéro de dépôt : **89401703.7**

(22) Date de dépôt : **16.06.89**

(54) **Procédé de traitement de surface de particules de matières pulvérulentes finement micronisées.**

(30) Priorité : **17.06.88 FR 8808149**

(43) Date de publication de la demande :
**20.12.89 Bulletin 89/51**

(45) Mention de la délivrance du brevet :
**16.10.91 Bulletin 91/42**

(84) Etats contractants désignés :
**DE ES FR GB IT**

(56) Documents cités :
**FR-A- 1 562 280**
**FR-A- 1 578 057**
**FR-A- 1 583 182**

(73) Titulaire : **Bazante, Georges**
**17, Rue Jeanne d'Arc**
**F-60410 Verberie (FR)**
Titulaire : **Absi, Faysal**
**Rue Bezem Malki B.P. 11414**
**Damas (SY)**

(72) Inventeur : **Bazante, Georges**
**17, Rue Jeanne d'Arc**
**F-60410 Verberie (FR)**
Inventeur : **Absi, Faysal**
**Rue Bezem Malki B.P. 11414**
**Damas (SY)**

(74) Mandataire : **Loyer, Bertrand et al**
**Cabinet Pierre Loyer 77, rue Boissière**
**F-75116 Paris (FR)**

## Description

La présente invention est relative à un procédé de traitement de surface de particules de matières pulvérulentes finement micronisées.

Beaucoup d'industries et notamment l'industrie des matières plastiques utilisent des charges minérales qui sont mélangées à la matière plastique de base. Il est en particulier connu d'utiliser du carbonate de calcium finement broyé dont les particules ont au préalable subi un traitement de surface au moyen d'acides gras mélangés ou non avec des esters d'acides gras.

Ces poudres fines de carbonate de calcium ont, le plus souvent, une granulométrie moyenne de 1 à 5 · $10^{-6}$ m, avec une limite supérieure de 6 à 25 · $10^{-6}$m.

Le traitement en surface de ces poudres consiste à enrober ces grains par de l'acide gras (seul ou en mélange avec des esters d'acide gras), dans un milieu ou se trouvent :

— l'acide gras liquide à température assez élevée,

— les grains bien dispersés dans l'air chaud, en mouvement tourbillonnaire,

ceci pour assurer une absorbtion intime et homogène de l'acide gras liquide par les grains de carbonate de calcium, avec une réaction chimique partielle entre les matières en contact, produisant une légère couche de stéarate de calcium sur la face des grains, dont l'importance dépend des conditions physiques du traitement et de la nature de la matière première.

Les procédés connus consistent donc à procéder dans un premier temps à sécher, puis broyer et ensuite classifier la matière première pour obtenir une poudre sèche ayant la granulométrie finale désirée, puis ensuite de procéder à l'enrobage et traitement de surface de cette poudre dans un deuxième temps.

Il faut pour cela avoir plusieurs installations, comportant :

1°) Installation de séchage broyage (éventuellement avec classification incorporée) ;

2°) Installation de classification de la poudre brute de broyage ;

3°) Installation d'enrobage — traitement de surface de la poudre finale ;

ce qui rend les procédés connus, longs, et coûteux.

On connaît par le brevet FR-A 1562280 une installation dans laquelle on effectue simultanément la déshumidification et la réduction en poudre fine du mélange d'argile en mottes et de substance organique d'enrobage en faisant passer ce mélange en même temps qu'un gaz chaud tel que de l'air à travers un désintégrateur capable de le réduire en poudre fine.

Cependant, il s'avère que cette installation ne permet pas d'obtenir une poudre de carbonate de calcium suffisamment fine, et cela notamment parce que le désintégrateur ne permet de fractionner le carbonate pratiquement qu'en particules de grosseur supérieure à 25 microns. Les seules particules qui seraient peut-être susceptibles d'être acceptables sont contenues dans l'air qui s'échappe du cyclone et sont donc perdues.

On connaît encore par le brevet FR-A-1583182 un procédé de préparation de poudres de talc hydrofuges. Le produit hydrofuge est mélangé au talc à l'état brut c'est-à-dire de poudre grossière, le mélange est mis à l'état de lit fluidisé à une température voisine ou de préférence supérieure à la température de fusion du produit hydrofuge (parafine) et est soumise à un traitement de broyage pneumatique dans un microniseur à rotors.

Cependant ce procédé et son installation présentent d'importants inconvénients :

— la réalisation d'un lit fluidisé préalable au traitement d'enrobage lui-même nécessite de broyer préalablement en poudre (même grossière) le minérai ; et de disposer des organes de contrôle des débits et température, ce qui élève considérablement le coût de l'installation,

— la dimension la plus fine obtenue n'est pas inférieure à 10 microns, ce qui est très insuffisant pour une utilisation dans les PVC.

D'autre part une autre caractéristique des particules de carbonate enrobée est leur taux d'humidité. Celui-ci ne doit pas être inférieur à 0,5% ; et le taux préféré est de l'ordre de 0, 1%. Cette exigence est nécessaire pour obtenir une bonne fluidité des particules, et éviter toute agglomération, ce qui rendrait impossible leur utilisation dans les PVC.

La présente invention a pour objectif d'apporter une amélioration aux dispositifs et procédés décrits dans ces installations précédentes, qui donne en un seul traitement une poudre de particules de carbonate de calcium de dimensions comprises entre 1 et 25 · $10^{-6}$ m, enrobée de stéarate de calcium et d'acide stéarique, ayant un taux d'humidité maximal de l'ordre de 0,5%.

L'invention a pour objet un procédé continu d'enrobage de carbonate de calcium au moyen d'un acide gras du type acide stéarique, du type dans lequel on mélange le carbonate de calcium humide et préconcassé avec l'acide gras solide sous forme de morceaux, on introduit ce mélange humide dans un broyeur traversé par un courant d'air chauffé dans un dispositif de chauffage, caractérisé en ce que :

— les grains de carbonate et les morceaux d'acide sont de dimensions inférieures à 1 cm ;

— le broyage est une micronisation ultrafine ;

— l'air chaud est introduit en mouvement tourbillonnaire dans le microniseur, à une température élevée, de l'ordre de 70°C à 120°C au moins, l'air chaud ayant pour fonction de mélanger et homogénéiser le mélange, de liquéfier l'acide gras, et de sécher très rapidement le carbonate, de telle sorte que les grains de carbonate sont dans un premier temps broyés et séchés, et dans un deuxième temps pulvérisés de plus en plus finement et mis en contact interne avec l'acide gras liquide, et homogénéisé ; et en ce que :

— une partie de l'air est extraite du microniseur et recirculée dans le dispositif de chauffage pendant que l'autre partie véhicule les particules enrobées d'abord dans un dispositif de classement qui sépare les particules les plus lourdes, pour conduire ensuite les plus fines dans une trémie de stockage,

— les particules les plus lourdes sont recyclées directement dans le mélange humide d'entrée afin, d'une part de les broyer à nouveau, et de préchauffer le mélange, et d'en réduire l'humidité.

L'invention a encore pour objet le dispositif permettant de mettre en oeuvre le procédé d'enrobage précédent. Il comporte une trémie d'alimentation pour le carbonate de calcium, une trémie d'alimentation pour l'acide gras à l'état solide, un broyeur centrifuge à micronisation, un circuit d'air chaud, un classificateur de particules, une conduite de recyclage, une conduite et une trémie de stockage, et est caractérisé en ce que le circuit de chauffage comporte une boucle de recirculation, la conduite de recirculation des particules alimente directement la trémie d'alimentation de carbonate de calcium, et en ce que des moyens de contrôle des écoulements sont prévus (débit d'air, de particules, températures, hygrométrie, pression) afin d'assurer le fonctionnement de l'installation en continu quelque soit l'humidité du mélange, et la constance des caractéristiques du produit final.

En outre, le dispositif est caractérisé par le fait que la trémie d'alimentation en acide gras se déverse dans la trémie d'alimentation en carbonate par l'intermédiaire d'un organe doseur.

Le procédé selon l'invention consiste à mélanger dans un broyeur de micronisation la matière minérale préconcassée provenant de carrière humide en grains d'un diamètre de l'ordre de 1 cm et l'acide gras, sous sa forme solide, fragmenté en morceaux ayant sensiblement les mêmes dimensions, le broyeur étant traversé par un courant d'air tourbillonnaire chaud à une température comprise entre 70°C et 120°C au moins, dépendant de la nature de matière première et de son taux d'humidité.

Le procédé selon la présente invention est mis en oeuvre dans une installation comportant :

— un broyeur muni d'un dispositif d'alimentation en acide gras solidifié se déversant dans la trémie d'alimentation en matière minérale, elle-même se déversant dans le broyeur,

— d'un dispositif de chauffage de l'air,

— d'un sélecteur statique de gros grains, avec recyclage de ces grains dans le broyeur,

— d'un classificateur dynamique pour trier la poudre micronisée, séchée et enrobée et pour recycler les grains dont la taille est supérieure à une limite prédéterminée.

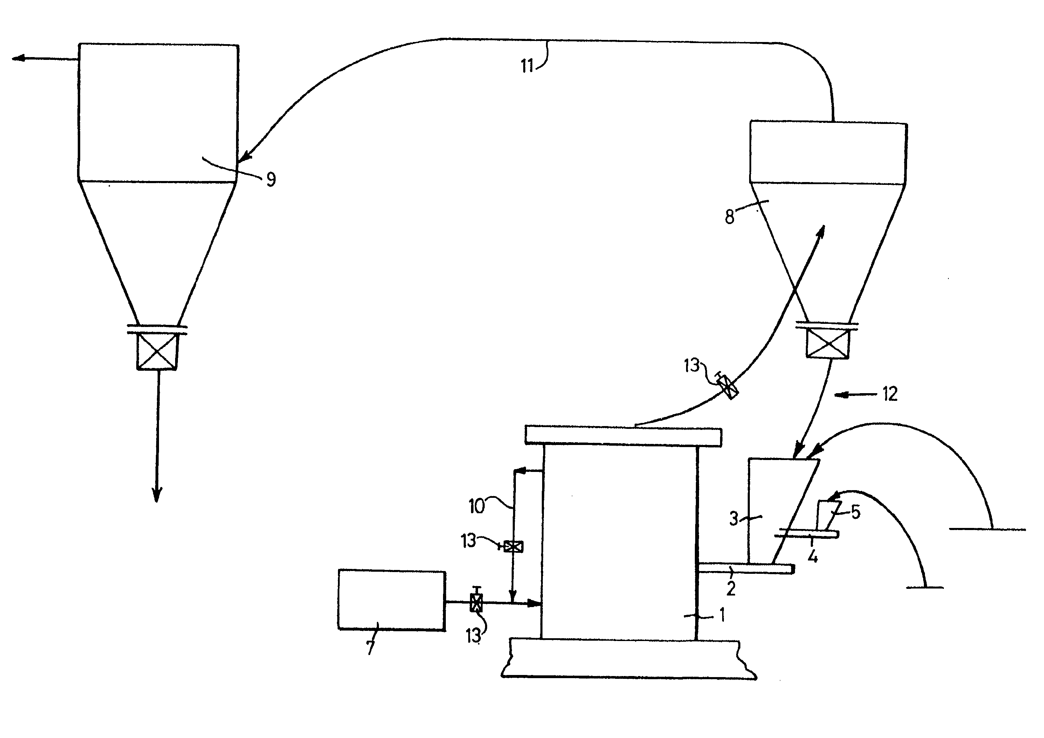

A titre d'exemple, on a représenté à la figure unique un exemple d'installation pour la mise en oeuvre du procédé.

En se reportant à cette figure, on voit que l'installation comporte un broyeur centrifuge 1, de type connu, alimenté par une vis sans fin 2, à partir d'une trémie 3.

La trémie 3 contient la matière minérale à enrober ou à traiter en surface, qui provient de la carrière et a été simplement pré-concassée sans avoir subi de séchage. Par "pré-concassée", on entend qu'elle a été grossièrement broyée en grains d'un diamètre de l'ordre de 1 cm. Comme elle n'a pas été séchée, sa teneur en humidité peut être de l'ordre de 5% à 10%, voire plus.

Dans la trémie 3, se déverse une vis sans fin 4 provenant d'une deuxième trémie 5. Cette trémie 5 contient l'acide stéarique, qui à la température normale est sous forme solide. Cet acide stéarique est également concassé en grains ayant pratiquement les mêmes dimensions que les grains de matière à enrober. Le débit de la vis sans fin 4 est réglable, et celle-ci constitue un mécanisme doseur qui introduit dans la trémie 2 la proportion voulue d'acide stéarique.

A la partie basse du broyeur 1 débouche une canalisation d'air chaud 6, provenant d'une source d'air chaud 7 où l'air est chauffé à la température désirée, qui est comprise entre 70°C et 120°C. Cette température est déterminée en fonction du taux d'humidité et de dureté de la matière minérale se trouvant dans la trémie 3 : plus cette matière est humide, plus l'air doit être chaud. Dans le cas où la matière à enrober est du carbonate de calcium, il faut pratiquement une température d'air chaud de 80° lorsque le taux d'humidité est de 5% et de 110°C lorsque ce taux est de 10%.

Le taux d'acide gras introduit dans la trémie 3 dépend de la porosité, des capacités d'absorption de la matière et de la surface spécifique de celle-ci. De préférence, il est réglé en dessous de la limite de saturation de la poudre micronisée de façon :

— à ce que cette poudre ne colmate pas après enrobage, et reste assez fluide pour être bien entraînée, dispersée dans l'air, et bien classifiée à la sortie du broyeur,

— à empêcher qu'un excédent d'acide gras coule au fond du broyeur.

Dans le cas d'acide stéarique et de carbonate de calcium, le taux d'acide gras est de 0,6% à 1,5% du carbonate.

L'installation comporte en outre un sélecteur statique de gros grains placé, comme cela est connu au sommet du broyeur 1 et un classificateur 8 recyclant les grains trop gros et envoyant dans une trémie de stockage 9 la poudre micronisée enrobée.

Le recyclage des gros grains, encore chauds, se fait par la conduite 12, directement dans la trémie 3 contenant le mélange. Cette disposition permet notamment d'amorcer le séchage du carbonate de calcium humide.

Le traitement de surface se fait pratiquement en même temps que le broyage. L'air chaud sèche le carbonate de calcium, liquéfie l'acide stéarique qui sous l'effet centrifuge tapisse la paroi cylindrique intérieure du broyeur. Les grains de matière, entraînés par le courant d'air chaud ascendant, sont violemment projetés contre ces parois, et sont brisés et micronisés progressivement, tout en étant mis en contact avec l'acide gras liquide très chaud.

Le mouvement tourbillonnaire du courant d'air ascendant dans le broyeur assure le mélange intime et l'homogénéisation parfaite du carbonate de calcium micronisé.

Un des problèmes principaux que vise à résoudre l'invention est précisément celui du séchage du carbonate de calcium. En effet, il est nécessaire que les particules de calcium soient pratiquement totalement séchées avant d'être enrobées, car au contact de l'acide stéarique sur le minerai il se forme une couche de stéarate de calcium qui empêche l'humidité restant dans la particule de se libérer. Le séchage doit donc être très rapide, de préférence dans le premier tiers du microniseur.

Il est donc nécessaire d'alimenter l'appareil avec un grand volume d'air très chaud. Mais d'autre part, on ne peut pas augmenter le débit d'air indéfiniment car les particules doivent rester un minimum de temps dans le microniseur pour atteindre la dimension voulue.

Selon l'invention on résoud ce problème en disposant une conduite 10 de recyclage de l'air chaud dans le dispositif de chauffage, soit dans le réchauffage d'air, soit en aval du réchauffeur à l'entrée du microniseur. Une partie de l'air chaud est alors recyclée, pendant que l'autre partie véhicule les particules dans le classificateur puis par la conduite 11 vers la trémie de stockage, ce qui permet d'avoir à la fois un grand débit d'air de séchage, et un débit moindre d'air transporteur.

D'autre part, afin de contrôler les débits d'air, de carbonate, et d'acide, et les teneurs en humidité des particules, on dispose dans les conduites des moyens de mesure (sondes de températures, de pression, d'hygrométrie, débit mètre) et de contrôle de débit (vannes 13).

L'expérience prouve que l'on réalise en une seule opération :

— le séchage de la matière minérale,
— son broyage jusqu'à une micronisation, de dimension de l'ordre de $5 \cdot 10^{-6}$ m,
— son traitement de surface de façon intime et régulière,

de sorte que l'on obtient à meilleur marché un meilleur produit.

## Revendications

1. Procédé continu d'enrobage de carbonate de calcium au moyen d'un acide gras du type acide stéarique, du type dans lequel on mélange le carbonate de calcium humide et préconcassé avec l'acide gras solide sous forme de morceaux, on introduit ce mélange humide dans un broyeur traversé par un courant d'air chauffé dans un dispositif de chauffage, caractérisé en ce que :
   — les grains de carbonate et les morceaux d'acide sont de dimensions inférieures à 1 cm ;
   — le broyage est une micronisation ultrafine ;
   — l'air chaud est introduit en mouvement tourbillonnaire dans le microniseur (1), à une température élevée, de 70°C à 120°C au moins, l'air chaud ayant pour fonction de mélanger et homogénéiser le mélange, de liquéfier l'acide gras, et de sécher très rapidement le carbonate, de telle sorte que les grains de carbonate sont dans un premier temps broyés et séchés, et dans un deuxième temps pulvérisés de plus en plus finement et mis en contact interne avec l'acide gras liquide, et homogénéisé ; et en ce que :
   — une partie de l'air est extraite du microniseur et recirculée (10) dans le dispositif de chauffage pendant que l'autre partie véhicule les particules enrobées d'abord dans un dispositif de classement (8) qui sépare les particules les plus lourdes, pour conduire ensuite (11) les plus fines dans une trémie de stockage (9),
   — les particules les plus lourdes sont recyclées directement (12) dans le mélange humide d'entrée (3) afin, d'une part de les broyer à nouveau, et de préchauffer le mélange, et d'en réduire l'humidité.

2. Dispositif pour la mise en oeuvre du procédé d'enrobage selon la revendication 1 comportant :
   — une trémie (3) d'alimentation pour le carbonate de calcium,
   — une trémie d'alimentation (5) pour l'acide gras à l'état solide,
   — un broyeur centrifuge à micronisation (1),
   — un circuit d'air chaud (7, 10),
   — un classificateur de particules (8),
   — une conduite de recyclage de carbonate (12),
   — une conduite (11) et une trémie de stockage (9),

caractérisé en ce que le circuit de chauffage comporte une boucle (10) de recirculation, la conduite de recirculation des particules alimente directement la trémie d'alimentation de carbonate de calcium, et en ce que des moyens de contrôle des écoulements sont prévus (débit d'air, de particules, températures, hygrométrie, pression) afin d'assurer le fonctionnement de l'installation en continu quelle que soit l'humidité du mélange, pour des caractéristiques constantes du produit final.

## Patentansprüche

1. Kontinuierliches Verfahren zum Umhüllen von Calciumcarbonat mittels einer Fettsäure vom Stearinsäuretypus, worin man das feuchte und vorgebrochene Calciumcarbonat mit der festen Fettsäure in Form von Bruchstücken vermischt, man diese feuchte Mischung in einen von durch eine Heizvorrichtung erwärmter, bewegter Luft durchströmten Zerkleinerer einleitet, **dadurch gekennzeichnet, daß**

— die Carbonatkörner und die Säurebruchstücke Dimensionen von kleiner als 1 cm aufweisen ;

— die Zerkleinerung eine Ultrafeinmikronisation ist ;

— die erwärmte Luft in einem Wirbelstrom in den Mikronisator (1) bei erhöhter Temperatur von 70°C bis mindestens 120°C eingeleitet wird, wobei die erwärmte Luft die Funktion hat, die Mischung zu mischen und zu homogenisieren, die Fettsäure zu verflüssigen und das Carbonat so schnell zu trocknen, daß die Carbonatkörner zum ersten gebrochen und getrocknet und zum zweiten mehr und mehr feiner pulversiert werden und zum internen Kontakt mit der flüssigen Fettsäure gebracht und homogenisiert werden ; und daß

— ein Teil der Luft aus dem Mikronisator abgezogen und in die Heizvorrichtung wieder zurückgeführt wird (10) während der andere Teil die umhüllten Partikel anschließend in eine Sortiervorrichtung (8) trägt, die die schwereren Partikel abtrennt, um schließlich die feineren in ein Vorratsgefäß (9) zu leiten (11),

— die schwereren Teilchen in die eintretende feuchte Mischung (3) schließlich direkt zurückgeführt (12) werden, um einerseits von neuem zerkleinert zu herden und die Mischung vorzuwärmen und um die Feuchtigkeit zu reduzieren.

2. Vorrichtung zum Durchführen des Umhüllungsverfahrens nach Anspruch 1, umfassend

— ein Vorratsgefäß (3) für das Calciumcarbonat,

— ein Vorratsgefäß (5) für die Fettsäure im festen Zustand,

— eine Mikronisationsschleudermühle (1),

— eine Warmluftleitung (7, 10),

— einen Teilchensortierer (8),

— eine Leitung zur Rückführung von Carbonat (12),

— eine Leitung (11) und ein Vorrarsgefäß (9),

**dadurch gekennzeichnet, daß** die Wärmeleitung eine Rezirkulationsschleife (10) enthält, die Rezirkulationsleitung der Partikel direkt in das Vorratsgefäß des Calciumcarbonats führt und daß für konstante Eigenschaften des Endproduktes Kontrollvorrichtungen für den Ausfluß vorhanden sind (Austrug von Luft, von Teilchen, Temperaturen, Hygrometrie, Druck) um das kontinuierliche Funktionieren der Vorrichtung sicherzustellen, wie immer auch die Feuchtigkeit der Mischung sein mag.

## Claims

1. Continuous process for coating calcium carbonate by means of a stearic acid type fatty acid, of the type in which the moist, rough-crushed calcium carbonate is mixed with the solid fatty acid in the form of pieces, and this moist mixture is introduced into a grinder through which passes a current of air which has been heated in a heating device, characterised in that :

— the carbonate grains and the pieces of acid are less than 1 cm in size ;

— the grinding process is an ultra-fine micronisation process ;

— the hot air is introduced into the microniser (1) in a turbulent movement at a high temperature of at least 70°C to 120°C, the function of the hot air being to mix and homogenise the mixture, to liquify the fatty acid and to dry the carbonate very quickly, in such a manner that the carbonate grains are firstly ground and dried, and secondly powdered increasingly finely and brought into intimate contact with the liquid fatty acid, and homogenised ; and in that ;

— some of the air is extracted from the microniser and recirculated (10) in the heating device while the remainder first conveys the coated particles into a grading device (8) which separates the heaviest particles and then guides (11) the finest particles into a storage hopper (9) ;

— the heaviest particles are then recycled directly (12) into the moist input mixture (3), in order firstly to regrind them, and then to preheat the mixture and reduce the moisture thereof.

2. Device for implementing the coating process according to claim 1, comprising :

— a feed hopper (3) for the calcium carbonate ;

— a feed hopper (5) for the fatty acid in the solid state ;

— a centrifugal micronising grinder (1) ;

— a hot air circuit (7, 10) ;

— a particle grader (8) ;

— a carbonate recycling duct (12) ;

— a duct (11) and storage hopper (9) ;

characterised in that the heating circuit comprises a recirculation loop (10), the particle recirculation duct feeds the calcium carbonate feed hopper directly, and in that there are provided means for controlling the flows (air flow, particle flow, temperature, hygrometry, pressure) in order to ensure that the installation functions continuously irrespective of the moisture content of the mixture, so that the characteristics of the final product are constant.